# EUROPEAN PATENT APPLICATION

(11) **EP 3 755 085 A1**
(43) Date of publication of application: **23.12.2020**
(21) Application number: 18906628.5
(22) Date of filing: 13.02.2018
(51) Int. Cl.: H04W 72/04

(54) **METHOD AND DEVICE FOR TRANSMITTING INFORMATION**

(71) Applicant: GUANGDONG OPPO MOBILE TELECOMMUNICATIONS CORP., LTD., Wusha, Chang'an Dongguan, Guangdong 523860 (CN)
(72) Inventor: LIN, Yanan, Dongguan, Guangdong 523860 (CN)
(74) Representative: Ziebig & Hengelhaupt Patent- und Rechtsanwaltskanzlei PartG mbB
(86) International application number: PCT/CN2018/076772
(87) International publication number: WO 2019/157678

(57) **Abstract**

Disclosed in an embodiment of the present invention are a method and device for transmitting information. The method comprises: a terminal device receiving first information transmitted by a network device; the terminal device determining, from uplink transmission resources, and according to the first information, a first resource for transmitting uplink control information; and the terminal device using the first resource to transmit the uplink control information.

## Description

### TECHNICAL FIELD

Embodiments of the disclosure relate to the field of communications, and more particularly to a method and device for information transmission.

### BACKGROUND

In a long term evolution (LTE) system, when transmission of uplink control information (UCI) conflicts with transmission of uplink data, both the UCI and the uplink data may be transmitted through a physical uplink shared channel (PUSCH). For a dynamically scheduled PUSCH, a network device may anticipate whether a terminal device transmits both UCI and uplink data in the PUSCH or not, so the network device may reserve appropriate resources and configure an appropriate modulation and coding scheme (MCS), to ensure data transmission reliability. For a semi-persistently scheduled PUSCH, since an uplink service has low reliability and delay requirements, even though uplink data is incorrectly received because of transmission of UCI in the PUSCH, data transmission reliability may also be ensured by retransmission.

However, in a 5th-generation (5G) new radio (NR) system, semi-persistent scheduling may also be adopted to transmit high-reliability and low-delay services. In such case, for a semi-persistent scheduling manner, if both UCI and uplink data are transmitted in a PUSCH, reliability and delay requirements of uplink data transmission may not be guaranteed. Therefore, a technical solution capable of solving the problem is needed.

### SUMMARY

The embodiments of the disclosure provide a method and device for information transmission, which can achieve a compromise between data transmission reliability and transmission delay.

A first aspect provides a method for information transmission, which may include that: a terminal device receives first information from a network device; the terminal device determines, based on the first information, a first resource for transmitting UCI in an uplink transmission resource; and the terminal device transmits the UCI according to the first resource.

According to the method for information transmission in the embodiments of the disclosure, the resource for transmitting the UCI in the uplink transmission resource may be determined according to the first information configured by the network device, and furthermore, the terminal device may transmit the UCI through the resource for transmitting the UCI, so that the method is favorable for solving the problem that transmission of the UCI conflicts with transmission of uplink data.

In a possible implementation, the first information may indicate at least one of:
whether the UCI can be transmitted in the uplink transmission resource;
a number of resources available for transmission of the UCI;
a resource proportion available for transmission of the UCI;
a number of bits of the UCI that can be transmitted; or
a type of the UCI that can be transmitted.

In such a manner, the terminal device may determine whether the UCI can be transmitted through the uplink transmission resource or not according to the first information and, if the UCI can be transmitted, may further determine a sending manner for the UCI. For example, all bits of the UCI to be sent are transmitted, or the UCI to be sent is sent after being processed.

In a possible implementation, the first information may be explicitly or implicitly indicated.

For example, the first information may be configured for the terminal device through an explicit instruction (for example, high-layer signaling or physical-layer signaling); or, existing information or signaling may be configured to indicate the first information in a specific condition or a specific scenario. There are no limits made thereto in the embodiments of the disclosure.

In a possible implementation, the first information may be carried in an indication field for indicating an MCS offset of the UCI.

Optionally, a length of an existing indication field for indicating the MCS offset may be increased to carry the first information, or the first information may also be carried through a reserved bit in the existing indication field for indicating the MCS offset. There are no limits made thereto in the embodiments of the disclosure.

In a possible implementation, the first information may be carried in multiple indication fields for indicating the MCS offset of the UCI, each of the multiple indication fields may correspond to a respective bit number range and/or UCI type, and the bit number range indicates a range of a number of bits for limited transmission of downlink control information.

In such a manner, at least one of the number of bits allowed for transmission of the UCI or the UCI type may be flexibly indicated through the multiple indication fields, so that flexibility of UCI resource indication is improved.

In a possible implementation, when an offset value indicated in the indication field satisfies a first condition, it may be indicated that the UCI cannot be transmitted through the uplink transmission resource.

In a possible implementation, that the offset value indicated in the indication field satisfies the first condition may include that the offset value indicated in the indication field is zero.

In such a manner, the existing indication field is reused to carry the first information, so that a signaling overhead may be reduced, and meanwhile, the MCS offset of the UCI may be flexibly configured, for example, limited transmission of the UCI may be implemented. Therefore, the conflict that both the UCI and the uplink data are transmitted through a PUSCH may be avoided, and transmission reliability of the uplink data may be ensured.

In a possible implementation, a value of a first part of the indication field may indicate UCI limited for transmission, and a value of a second part of the indication field may indicate UCI unlimited for transmission.

In such a manner, the existing indication field is reused to carry the first information, so that the signaling overhead may be reduced, and meanwhile, the MCS offset of the UCI may be flexibly configured, for example, limited transmission of the UCI may be implemented. Therefore, the conflict that both the UCI and the uplink data are transmitted through the PUSCH may be avoided, and the transmission reliability of the uplink data may be ensured.

In a possible implementation, the indication field may be used to indicate whether hybrid automatic repeat request ACKnowledgement (HARQ-ACK) information transmission is limited or not.

In a possible implementation, the indication field may be an indication field corresponding to channel state information (CSI), and when the offset indicated in the indication field satisfies a specific condition, it may be indicated that the number of bits of the UCI that can be transmitted is less than or equal to N and/or the type of the UCI that can be transmitted is HARQ-ACK information, N being a positive integer.

In such a manner, the first information may be alternately and implicitly indicated, so that indication flexibility of the first information is improved. In such an indication manner, transmission of a HARQ-ACK and the CSI may be simultaneously limited, which is favorable for ensuring the transmission reliability of the uplink data.

In addition, since importance/emergency degree of the CSI is lower than that of the HARQ-ACK information, transmission of the CSI is preferably considered to be limited in the embodiments of the disclosure. Therefore, under the circumstance that the transmission resource is limited, the CSI is preferably dropped to ensure transmission of the HARQ-ACK information, and downlink transmission efficiency may be maximized.

Moreover, the bit number/transmission resource for transmission of the HARQ-ACK is explicitly limited or implicitly limited through the indication field of the CSI, and multiple transmission manners may be implemented, for example, both the CSI and the HARQ-ACK are transmitted as required (namely unlimited transmission); the CSI is not transmitted, the HARQ-ACK is transmitted in a limited manner; and neither the CSI nor the HARQ-ACK is transmitted, so that a compromise between uplink transmission reliability and downlink transmission efficiency may be reached.

In a possible implementation, that the offset indicated in the indication field satisfies the specific condition may include that the offset value indicated in the indication field is zero.

In a possible implementation, the terminal device may determine the first information according to a type of a data channel and/or a duration for data transmission.

In a possible implementation, the first information may be specific to a semi-persistent resource.

In a possible implementation, the UCI may include at least one of the following:

a HARQ-ACK, a rank indicator (RI), a channel quality indication (CQI), a precoding matrix indication (PMI), a CSI reference signal resource indicator (CRI), a strongest layer indication (SLI), or layer 1-reference signal received power (L1-RSRP).

A second aspect provides a method for information transmission, which may include that: a network device determines first information, the first information being used for a terminal device to determine a first resource for transmitting UCI in an uplink transmission resource; and the network device sends the first information to the terminal device.

In a possible implementation, the first information may indicate at least one of:
whether the UCI can be transmitted in the uplink transmission resource; a number of resources available for transmission of the UCI; a resource proportion available for transmission of the UCI, a number of bits of the UCI that can be transmitted; or, a type of the UCI that can be transmitted.

In a possible implementation, the first information may be explicitly or implicitly indicated.

In a possible implementation, the first information may be carried in an indication field for indicating an MCS offset of the UCI.

In a possible implementation, the first information may be carried in multiple indication fields for indicating the MCS offset of the UCI, each of the multiple indication fields may correspond to a respective bit number range, and the bit number range may indicate a range of a number of bits for limited transmission of the downlink control information.

In a possible implementation, when an offset value indicated in the indication field satisfies a first condition, it may be indicated that the UCI cannot be transmitted through the uplink transmission resource.

In a possible implementation, that the offset value indicated in the indication field satisfies the first condition may include that the offset value indicated in the indication field is zero.

In a possible implementation, a value of a first part of the indication field may indicate UCI limited for transmission, and a value of a second part of the indication field may indicate UCI unlimited for transmission.

In a possible implementation, the indication field may indicate whether HARQ-ACK information transmission is limited or not.

In a possible implementation, the indication field may be an indication field corresponding to CSI, and when the offset indicated in the indication field satisfies a specific condition, it may be indicated that the number of bits of the UCI that can be transmitted is less than or equal to N and/or a type of the UCI that can be transmitted is HARQ-ACK information, N being a positive integer.

In a possible implementation, that the offset indicated in the indication field satisfies the specific condition may include that the offset value indicated in the indication field is zero.

In a possible implementation, the terminal device may determine the first information according to at least one of a type of a data channel or a duration for data transmission.

In a possible implementation, the first information may be specific to a semi-persistent resource.

In a possible implementation, the UCI may include at least one of the following:
a HARQ-ACK, an RI, a QI, a PMI, a CRI, an SLI, or L1-RSRP.

A third aspect provides a device for information transmission, which is configured to execute the method in the first aspect or any possible implementation mode of the first aspect. Specifically, the device includes units configured to execute the method in the first aspect or any possible implementation of the first aspect.

A fourth aspect provides a device for information transmission, which includes a memory, a processor, an input interface and an output interface. The memory, the processor, the input interface and the output interface are connected through a bus system. The memory is configured to store instructions. The processor is configured to execute the instructions stored in the memory to execute the method in the first aspect or any possible implementation of the first aspect.

A fifth aspect provides a device for information transmission, which is configured to execute the method in the second aspect or any possible implementation of the second aspect. Specifically, the device includes units configured to execute the method in the second aspect or any possible implementation of the second aspect.

A sixth aspect provides a device for information transmission, which includes a memory, a processor, an input interface and an output interface. The memory, the processor, the input interface and the output interface are connected through a bus system. The memory is configured to store instructions. The processor is configured to execute the instructions stored in the memory to execute the method in the second aspect or any possible implementation of the second aspect.

A seventh aspect provides a computer storage medium, which is configured to store computer software instructions for executing the method in the first aspect or any possible implementation of the first aspect, including a program designed to execute the abovementioned aspect.

An eighth aspect provides a computer program product including instructions, which run in a computer to enable the computer to execute the method in the first aspect or any optional implementation of the first aspect.

A ninth aspect provides a computer storage medium, which is configured to store computer software instructions for executing the method in the second aspect or any possible implementation of the second aspect, including a program designed to execute the abovementioned aspect.

A tenth aspect provides a computer program product including instructions, which run in a computer to enable the computer to execute the method in the second aspect or any optional implementation of the second aspect.

### BRIEF DESCRIPTION OF THE DRAWINGS

FIG. 1 is a schematic diagram of an application scenario according to an embodiment of the disclosure.
FIG. 2 is a schematic flowchart of a method for information transmission according to an embodiment of the disclosure.
FIG. 3 is a schematic diagram of a processing manner for downlink control information.
FIG. 4 is a schematic diagram of another processing manner for downlink control information.
FIG. 5 is a schematic flowchart of a method for information transmission according to another embodiment of the disclosure.
FIG. 6 is a schematic block diagram of a device for information transmission according to an embodiment of the disclosure.
FIG. 7 is a schematic block diagram of a device for information transmission according to another embodiment of the disclosure.
FIG. 8 is a schematic block diagram of a device for information transmission according to an embodiment of the disclosure.
FIG. 9 is a schematic block diagram of a device for information transmission according to another embodiment of the disclosure.

### DETAILED DESCRIPTION

The technical solutions in the embodiments of the disclosure will be described below in combination with the drawings.

The technical solutions of the embodiments of the disclosure may be applied to various communication systems, for example, a global system of mobile communication (GSM), a code division multiple access (CDMA) system, a wideband code division multiple access (WCDMA) system, a general packet radio service (GPRS), an LTE system, an LTE frequency division duplex (FDD) system, LTE time division duplex (TDD), a universal mobile telecommunication system (UMTS), a worldwide interoperability for microwave access (WiMAX) communication system or a future 5G system.

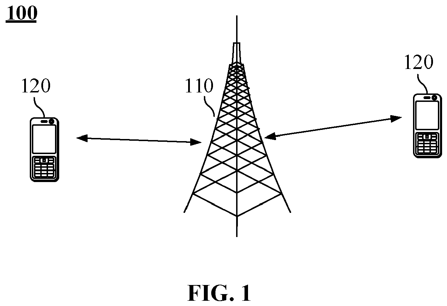

FIG. 1 illustrates a wireless communication system 100 to which the embodiments of the disclosure are applied. The wireless communication system 100 may include a network device 110. The network device 100 may be a device that communicates with a terminal device. The network device 100 may provide communication coverage for a specific geographical area, and may communicate with a terminal device (for example, User Equipment (UE)) under the coverage. Optionally, the network device 100 may be a base transceiver station (BTS) in the GSM or the CDMA system, may also be a NodeB (NB) in the WCDMA system, and may further be an evolutional Node B (eNB or eNodeB) in the LTE system, or a wireless controller in a cloud radio access network (CRAN). Or the network device may be a relay station, an access point, a vehicle device, a wearable device, a network-side device in a future 5G network, a network device in a future evolved public land mobile network (PLMN) or the like.

The wireless communication system 100 further includes at least one terminal device 120 under the coverage of the network device 110. The terminal device 120 may be mobile or fixed. Optionally, the terminal device 120 may refer to an access terminal, UE, a user unit, a user station, a mobile station, a mobile radio station, a remote station, a remote terminal, a mobile device, a user terminal, a terminal, a wireless communication device, a user agent or a user device. The access terminal may be a cell phone, a cordless phone, a session initiation protocol (SIP) phone, a wireless local loop (WLL) station, a personal digital assistant (PDA), a handheld device with a wireless communication function, a computing device, another processing device connected to a wireless modem, a vehicle device, a wearable device, a terminal device in the future 5G network, a terminal device in the future evolved PLMN or the like.

In the embodiments of the disclosure, the network device may configure a semi-persistent resource (or called a non-dynamic resource and a grant free resource) for the terminal device. The semi-persistent resource is a resource for non-dynamic scheduling-based transmission (or called semi-persistent transmission). Non-dynamic scheduling is another scheduling manner other than dynamic scheduling (for example, scheduling through physical-layer signaling), for example, a semi-persistent configuration-based transmission manner (namely Type1) or a semi-persistent configuration plus dynamic triggering-based transmission manner (namely Type2).

In the embodiments of the disclosure, the network device may configure an MCS offset for control information transmission in uplink semi-persistent transmission for the terminal device. For example, Betaoffset indicates an index of the MCS offset.

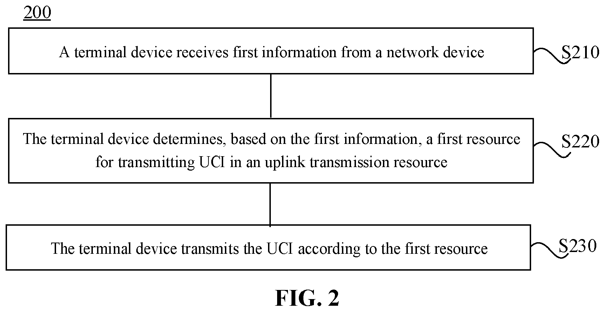

FIG. 2 is a schematic flowchart of a method for information transmission 200 according to an embodiment of the disclosure. The method 200 may be executed by the terminal device in the communication system 100 illustrated in FIG. 1. As illustrated in FIG. 2, the method 200 may include the following contents.

In S210, the terminal device receives first information from a network device.

In S220, the terminal device determines, based on the first information, a first resource for transmitting UCI in an uplink transmission resource.

In S230, the terminal device transmits the UCI according to the first resource.

According to the method for information transmission in the embodiment of the disclosure, the terminal device may determine, based on the first information configured by the network device, the resource for transmitting the UCI in the uplink transmission resource, and then the terminal device may transmit the UCI through the resource for transmitting the UCI. Advantageously, a conflict between transmission of the UCI and transmission of uplink data is thereby avoided.

As an example rather than a limitation, the UCI includes at least one of the following:
HARQ-ACK information, a CQI, a PMI, an RI, a CRI, an SLI, or L1-RSRP.

Optionally, in the embodiment of the disclosure, the uplink transmission resource may be a semi-persistent resource. For example, the uplink transmission resource may include a time-domain resource, frequency-domain resource or code-domain resource, etc. for non-dynamic scheduling-based transmission. There are no limits made thereto in the embodiment of the disclosure.

Optionally, in the embodiment of the disclosure, the first information may be specific to a semi-persistent resource, namely the first information may be only used for configuring the semi-persistent resource. Or, the first information may also be specific to a bandwidth part (BWP), or may also be specific to a carrier. There are no limits made thereto in the embodiment of the disclosure.

Optionally, the first information may be explicitly indicated, for example, the first information may be configured for the terminal device through an explicit instruction (for example, high-layer signaling or physical-layer signaling). Or it may also be implicitly indicated, for example, in a specific situation or a specific scenario, existing information or signaling may be used for indicating the first information. There are no limits made thereto in the embodiment of the disclosure.

Optionally, in some embodiments, the first information may be used for indicating at least one of the following:
whether the UCI can be transmitted in the uplink transmission resource or not; a number of resources available for transmission of the UCI; a resource proportion available for transmission of the UCI, a number of bits of the UCI that can be transmitted; or, a type of the UCI that can be transmitted.

It is to be noted that, in the embodiment of the disclosure, the numbers of bits of the UCI that can be transmitted may be a maximum number of bits available for transmission of the UCI, or may be a number of bits practically for transmission of the UCI. There are no limits made thereto in the embodiment of the disclosure.

It is to be understood that the above contents indicated by the first information are only examples, the first information may also be used for indicating other information and all related solutions fall within the scope of protection of the embodiment of the disclosure if the first information may be used for determining the resource for transmission of the UCI in the uplink transmission resource.

That is, the first information may be used for determining the resource for transmission of the UCI in the uplink transmission resource, so that the terminal device may determine, based on the first information, whether the UCI can be transmitted through the uplink transmission resource or not, and may further determine the sending manner for the UCI in responsive to determining that the UCI can be transmitted through the uplink transmission resource. Optionally, the terminal device may determine the sending manner for the UCI according to at least one of the following: the number of resources available for transmission of the UCI, the resource proportion available for transmission of the UCI, the number of bits of the UCI that can be transmitted, or the type of the UCI that can be transmitted. Optionally, the sending manner for the UCI may include, but not limited to, that all bits of the UCI to be sent are transmitted or the UCI to be sent is sent after being processed.

It is to be understood that, in the embodiment of the disclosure, processing for the UCI to be sent includes, but not limited to, zero padding, repetition, compression, multiplexing and dropping. For example, processing the UCI to be sent may include compressing the UCI. Herein, compression may refer to compressing the UCI from at least one dimension of a code block group (CBG), a space domain, a carrier domain or a time domain, namely the UCI may be compressed by taking a CBG, a space, a carrier or time as a unit. For example, UCIs belonging to the same carrier may be compressed together, or UCIs belonging to the same CBG may be compressed together. Or, processing the UCI to be sent may also include dropping the UCI. For example, part of bits of the UCI to be sent may be dropped to make the finally transmitted UCI not greater than the maximum bit number that can be transmitted, or the UCI may also be processed in another manner to make the finally transmitted UCI not greater than the maximum bit number that can be transmitted. The processing manner for the UCI is not particularly limited in the embodiment of the disclosure.

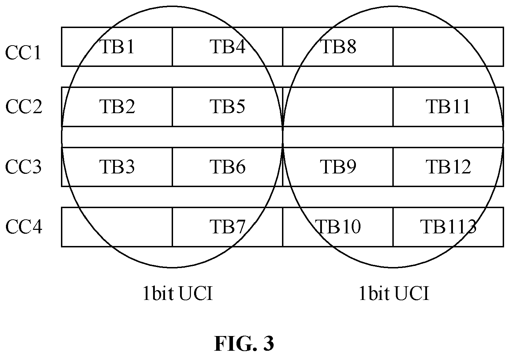

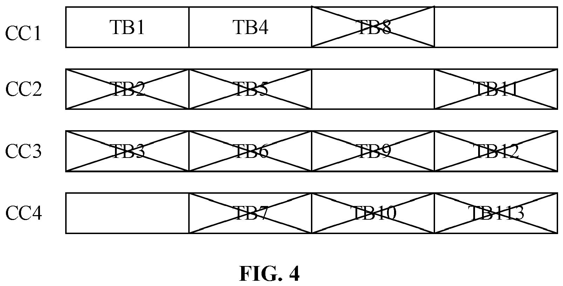

The processing manner for the UCI will be described below in combination with specific examples illustrated in FIG. 3 and FIG. 4 with the condition that the UCI is HARQ-ACK information as an example.

For example, if there are 13 bits of HARQ-ACK information to be fed back and only 2 bits of HARQ-ACK information can be transmitted in the uplink transmission resource, the terminal device may compress the 13 bits of HARQ-ACK information. For example, the 13 bits of HARQ-ACK information may be compressed in the time domain. As illustrated in FIG. 3, HARQ-ACK information in transmit block (TB) 1 and TB4 on a component carrier (CC) 1, HARQ-ACK information in TB2 and TB5 on a CC2, HARQ-ACK information in TB3 and TB6 on a CC3, and HARQ-ACK information in TB7 on a CC4 may be compressed into 1-bit UCI for transmission, and HARQ-ACK information in TB8 on the CC1, HARQ-ACK information in TB11 on the CC2, HARQ-ACK information in TB9 and TB12 on the CC3, and HARQ-ACK information in TB10 and TB13 on the CC4 may be compressed into 1-bit UCI for transmission.

Or, as illustrated in FIG. 4, last 11 bits of information in the 13 bits of HARQ-ACK information may also be dropped, and only the first two bits of the HARQ-ACK information are transmitted, namely only the HARQ-ACK information in the TB1 and TB4 on the CC1 is transmitted.

An indication manner for the first information will be described below in combination with specific embodiments in detail.

Embodiment 1: the first information is used for indicating the number of resources available for transmission of the UCI in the uplink transmission resource.

For example, if the number of resources, indicated by the first information, available for transmission of the UCI is N, namely the number of resources that can be used for transmission of the UCI in the uplink transmission resource configured by the network device for the terminal device is N, the terminal device may determine the maximum bit number M of the UCI that can be transmitted according to the resource number N and an MCS offset for transmission of the UCI,. Furthermore, the terminal device may determine the sending manner for the UCI according to the bit number L of the UCI to be sent and the maximum bit number M. For example, if L≤M, namely the maximum number of bits available for transmission of the UCI in the uplink transmission resource is enough to transmit all the bits of the UCI to be sent, in such case, the terminal device may send all the bits of the UCI. Or, if L>M, the terminal device may process the UCI to be sent to make the number of bits occupied by the finally transmitted UCI not greater than the maximum bit number M and then send the processed UCI, namely the number of bits of the UCI finally transmitted is a minimum value in the bit number L of the UCI to be sent and the maximum bit number M of the UCI that may be transmitted. A processing manner for the UCI may refer to the related descriptions made above and will not be elaborated herein.

Embodiment 2: the first information may be carried in an existing indication field for indicating the MCS offset.

That is, the network device may reuse the existing indication field for indicating the MCS offset to carry the first information, so that the indication field for indicating the MCS offset may not only be configured to indicate the MCS offset but also be configured to indicate the first information. Therefore, the terminal device may acquire the MCS offset and the first information from the indication field for indicating the MCS offset, and further determine, based on the first information carried in the indication filed, whether the UCI can be sent in the uplink transmission resource or not, and responsive to determining that the UCI can be transmitted in the uplink transmission resource, the terminal device may further determine the sending manner for the UCI based on the first information.

In such a manner, the existing indication field is reused to carry the first information, so that a signaling overhead may be reduced, and meanwhile, the MCS offset of the UCI may be flexibly configured, for example, limited transmission of the UCI may be implemented. Therefore, the conflict problem when both the UCI and the uplink data are transmitted through a PUSCH may be avoided, and the transmission reliability of the uplink data may be ensured.

Optionally, in the embodiment of the disclosure, a length of an existing indication field for indicating the MCS offset may be increased to carry the first information, or the first information may also be carried through a reserved field in the existing indication field for indicating the MCS offset. There are no limits made thereto in the embodiment of the disclosure.

As an example rather than a limitation, the indication manner for the first information may include the following.

A first situation: when an offset value indicated in the indication field for indicating the MCS offset satisfies a first condition, it may be indicated that the UCI cannot be transmitted in the uplink transmission resource. If the terminal device determines that the offset value indicated in the indication field corresponding to the UCI satisfies the first condition, it may be determined that the UCI cannot be transmitted in the uplink transmission resource.

Optionally, that the offset value indicated in the indication field for indicating the MCS offset satisfies the first condition may include that the offset value indicated in the indication field for indicating the MCS offset is zero or may also be another value with a specific meaning, for example, a reserved value. There are no limits made thereto in the embodiment of the disclosure.

A second situation: when the offset value indicated in the indication field for indicating the MCS offset satisfies a second condition, the resource proportion available for transmission of the UCI may be indicated. If the terminal device determines that the offset value indicated in the indication field corresponding to the UCI satisfies the second condition, the terminal device may determine an uplink transmission resource not greater than the resource proportion in the uplink transmission resource to transmit the UCI.

Optionally, that the offset value indicated in the indication field for indicating the MCS offset satisfies the second condition may include that the offset value indicated in the indication field configured to indicate the MCS offset is a positive number less than 1 or may also be another value with a specific meaning, for example, a reserved value. There are no limits made thereto in the embodiment of the disclosure.

For example, a table of Betaoffsets for carrying the first information may be illustrated in Table 1, where I represents a UCI index, and Betaoffset represents the MCS offset. If the resource number of the uplink transmission resource is 100, responsive to determining according to the UCI index that the value of the corresponding resource proportion is 0.1, the terminal device may determine that a maximum resource number for transmission of the UCI is 10. Further, the terminal device may determine the sending manner for the UCI according to the determined uplink transmission resource and MCS offset. Elaborations are omitted herein.

**Table 1**

| I | Betaoffset | Resource proportion | I | Betaoffset | Resource proportion |
|---|---|---|---|---|---|
| 0 | 2.000 | 0.01 | 8 | 12.625 | 0.05 |
| 1 | 2.500 | 0.01 | 9 | 15.875 | 0.05 |
| 2 | 3.125 | 0.01 | 10 | 20.000 | 0.1 |
| 3 | 4.000 | 0.01 | 11 | 31.000 | 0.1 |
| 4 | 5.000 | 0.01 | 12 | 50.000 | 0.1 |
| 5 | 6.250 | 0.05 | 13 | 80.000 | 0.1 |
| 6 | 8.000 | 0.05 | 14 | 126.000 | 0.1 |
| 7 | 10.000 | 0.05 | 15 | 1.0 | 0.1 |

A third situation: when the offset value indicated in the indication field for indicating the MCS offset satisfies a third condition, the first information may be configured to indicate that all the bits of the UCI may be transmitted, and furthermore, the terminal device may determine an MCS for the UCI according to the MCS offset corresponding to the UCI and an MCS for the uplink data, so that the terminal device may transmit the UCI to be sent according to the MCS for the UCI to be sent and the number of bits of the UCI. A specific implementation process will not be elaborated herein.

Optionally, that the offset value indicated in the indication field for indicating the MCS offset satisfies the third condition may include that the offset value indicated in the indication field for indicating the MCS offset is a positive number greater than 1 or may also be another value with a specific meaning, for example, a reserved value. There are no limits made thereto in the embodiment of the disclosure.

It is to be understood that the above indication manners for the first information are only examples and it may also be indicated in another manner that limited transmission or unlimited transmission is adopted for the UCI in the embodiment of the disclosure. The indication manner for the first information is not limited in the embodiment of the disclosure.

Embodiment 3: the MCS offset and the first information are indicated through the indication field for indicating the MCS offset according to specific situations.

That is, the existing Betaoffset may be adopted to indicate the MCS offset or indicate the first information, but whether the Betaoffset indicates the MCS offset or the first information may correspond to different conditions respectively or correspond to different scenarios. In such case, information parsing may be performed on the indication field according to specific configuration information. For example, whether the Betaoffset indicates the MCS offset or the first information may be determined according to configuration information such as a type of a data channel and a duration for data transmission. There are no limits made thereto in the embodiment of the disclosure.

For example, whether the Betaoffset indicates the MCS offset or the first information may correspond to different types of data channels. For example, when the type of the data channel is a type A (for example, a mini-slot type), the Betaoffset may indicate the MCS offset, and when the type of the data channel is a type B (for example, a slot type), the Betaoffset may indicate the first information. Therefore, the terminal device, when the type of the data channel is the type A, may parse information of the Betaoffset into the MCS offset and, when the type of the data channel is the type B, may parse the information of the Betaoffset into the first information.

For another example, whether the Betaoffset indicates the MCS offset or the first information may correspond to different durations for data transmission. For example, if the duration for data transmission falls within a first length range, the Betaoffset may indicate the MCS offset, and when the duration for data transmission falls within a second length range, the Betaoffset may indicate the first information. Therefore, the terminal device, when the duration for data transmission falls within the first length range, may parse the information of the Betaoffset into the MCS offset and, when the duration for data transmission falls within the second length range, may parse the information of the Betaoffset into the first information.

It is to be noted that the above manners for determining whether the Betaoffset indicates the MCS offset or the first information are only examples and whether the Betaoffset indicates the MCS offset or the first information may also be determined according to other information in the embodiment of the disclosure. There are no limits made thereto in the embodiment of the disclosure.

Embodiment 4: a value of a first part of the indication field for indicating the MCS offset may indicate UCI limited for transmission, and a value of a second part of the indication field for indicating the MCS offset may indicate UCI unlimited for transmission.

That is, a value of a first part in the Betaoffset may be used for determining specific UCI to be sent in a limited transmission manner and a value of a second part may be used for determining specific UCI to be sent in an unlimited transmission manner, namely all the bits of the UCI may be sent.

It is to be noted that the limited transmission manner may refer to that the UCI to be sent is processed at first and then the processed UCI is sent. Herein, processing includes, but not limited to, processing manners such as zero padding, repetition, compression, multiplexing and dropping.

For example, for Table 1, it may be indicated that the UCI with the UCI indexes 0 to 3 is transmitted in the limited transmission manner and the UCI with the UCI indexes 4 to 15 is transmitted in the unlimited transmission manner, namely all the bits of the UCI may be transmitted without processing the UCI.

Embodiment 5: the first information corresponding to first UCI is determined according to an indication field for indicating an MCS offset of second UCI.

In the embodiment of the disclosure, if there are multiple pieces of UCI, each UCI may correspond to a respective indication field for indicating an MCS offset. For example, the multiple pieces of UCI include the first UCI and the second UCI, and the indication field of the second UCI may be used for indicating the MCS offset for transmission of the second UCI. In embodiment 5, the indication field of the second UCI may also be used for determining a transmission manner for the first UCI, for example, the limited transmission manner or the unlimited transmission manner, and bit number information for transmission when the limited transmission manner is adopted.

For example, when an offset value indicated in the indication field of the second UCI satisfies a certain condition, it may be indicated that the first UCI is transmitted in the limited transmission manner, and furthermore, it may also be indicated that the bit number information for the limited transmission. Or, when the offset value indicated in the indication field of the second UCI satisfies a certain condition, it is indicated that the unlimited transmission manner is adopted for the first UCI, etc.

The indication manner for the first information will be described below in combination with embodiment 6 to embodiment 8 with the condition that the first UCI is HARQ-ACK information and the second UCI is CSI as an example. Of course, the first UCI and the second UCI may also be other UCI. The embodiment of the disclosure is not limited thereto.

For convenient distinguishing and understanding, an indication field corresponding to the first UCI is referred to a first indication field and the indication field corresponding to the second UCI is referred to a second indication field.

Embodiment 6: each of the first indication field and the second indication field includes a configuration that the offset value is 0.

It is to be understood that, in the embodiment of the disclosure, the indication field for indicating the MCS offset may be an MCS offset table. By way of example but not limitation, an MCS offset table corresponding to the HARQ-ACK information may be shown in Table 2, and an MCS offset table corresponding to the CSI may be shown in Table 3. In Table 2, I HARQ-ACK is an index of the HARQ-ACK information, and Betaoffset_HARQ-ACK is the MCS offset corresponding to the HARQ-ACK information. In Table 3, I_CSI is an index of the CSI, and Betaoffset CSI is the MCS offset of the CSI.

Optionally, in the embodiment, when the offset value indicated in the second indication field satisfies a first specific condition, it may be indicated that the first UCI is transmitted in the uplink transmission resource in the limited transmission manner (recorded as a first manner). Or, when the offset value indicated in the second indication field satisfies a second specific condition, it may be indicated that the first UCI is transmitted in the uplink transmission resource in the unlimited transmission manner (recorded as a second manner). Or, when an offset value indicated in the first indication field satisfies a third specific condition, it may be indicated that the second UCI is transmitted in the uplink transmission resource in the limited transmission manner (recorded as a third manner).

Descriptions will be made below with the following condition as an example: that the offset value indicated in the second indication field satisfying the first specific condition is that the Betaoffset of the second indication field is 0, that the offset value indicated in the second indication field satisfying the second specific condition is that the Betaoffset of the second indication field is greater than 0, and that the offset value indicated in the first indication field satisfying the third specific condition is that the offset value indicated in the first indication field is 0. Of course, the embodiment of the disclosure is also applied to other specific conditions. The embodiment of the disclosure is not limited thereto.

The first manner: when the Betaoffset_CSI corresponding to the I_CSI is valued to be 0, it may be indicated that only the HARQ-ACK information is transmitted, and furthermore, it may also be indicated that the limited transmission manner is adopted for the HARQ-ACK information. For example, the maximum bit number for limited transmission of the HARQ-ACK information may be N, for example, N may be 2, and in such case, the HARQ-ACK information may be transmitted according to the maximum bit number N for limited transmission and in combination with the Betaoffset HARQ-ACK in the MCS offset table corresponding to the HARQ-ACK information. A specific process will not be described in detail herein.

The second manner: if the Betaoffset CSI corresponding to the I_CSI is valued to be greater than 0, the terminal device may determine that the number of bits for transmission of the HARQ-ACK information is unlimited, namely the HARQ-ACK information may be transmitted according to the practical number of bits of the HARQ-ACK information to be sent. An MCS level for transmission of the HARQ-ACK information may be determined according to the Betaoffset_HARQ-ACK shown in Table 2, and an MCS level for transmission of the CSI may be determined according to the Betaoffset_CSI shown in Table 3.

The third manner: if the Betaoffset HARQ-ACK corresponding to the I_HARQ-ACK is valued to be 0, the terminal device may determine that the HARQ-ACK information is not transmitted, and in such case, may further determine that the CSI is transmitted in the limited transmission manner.

In such a manner, in embodiment 6, the first information may be alternately and implicitly indicated, so that indication flexibility of the first information is improved. In such an indication manner, transmissions of both a HARQ-ACK and the CSI may be simultaneously limited, which is favorable for ensuring the transmission reliability of the uplink data.

In addition, since importance/emergency degree of the CSI is lower than that of the HARQ-ACK information, transmission of the CSI is preferentially considered to be limited in the embodiments of the disclosure. Therefore, under the circumstance that the transmission resource is limited, the CSI is preferentially dropped to ensure transmission of the HARQ-ACK information, and downlink transmission efficiency may be maximized.

Moreover, the bit number/transmission resource for transmission of the HARQ-ACK is explicitly limited or implicitly limited through the indication field of the CSI, and multiple transmission manners may be implemented, for example, both the CSI and the HARQ-ACK are transmitted as required (namely unlimited transmission); the CSI is not transmitted, and the HARQ-ACK is transmitted in the limited manner; and neither the CSI nor the HARQ-ACK is transmitted, so that a compromise between uplink transmission reliability and downlink transmission efficiency may be reached.

**Table 2**

| I_HARQ-ACK | Betaoffset_HARQ-ACK | I HARQ-ACK | Betaoffset_HARQ-ACK |
|---|---|---|---|
| 0 | 0 | 8 | 10.000 |
| 1 | 2.000 | 9 | 12.625 |
| 2 | 2.500 | 10 | 15.875 |
| 3 | 3.125 | 11 | 20.000 |
| 4 | 4.000 | 12 | 31.000 |
| 5 | 5.000 | 13 | 50.000 |
| 6 | 6.250 | 14 | 80.000 |
| 7 | 8.000 | 15 | 1.0 |

**Table 3**

| I_H HARQ-CSI | Betaoffset_CSI | I_CSI | Betaoffset_CSI |
|---|---|---|---|
| 0 | 0 | 8 | 6.250 |
| 1 | 1.250 | 9 | 8.000 |
| 2 | 1.625 | 10 | 10.000 |
| 3 | 2.000 | 11 | 12.625 |
| 4 | 2.500 | 12 | 15.875 |
| 5 | 3.125 | 13 | 20.000 |
| 6 | 4.000 | 14 | Reserved |
| 7 | 5.000 | 15 | Reserved |

Embodiment 7: only one of the first indication field and the second indication field includes the configuration that the Betaoffset is valued to be 0.

It is to be understood that, in the embodiment of the disclosure, the indication field for indicating the MCS offset may be an MCS offset table. By way of example but not limitation, an MCS offset table corresponding to the HARQ-ACK information may be shown in Table 4, and an MCS offset table corresponding to the CSI may be shown in Table 3. In Table 4, I HARQ-ACK is the index of the HARQ-ACK information, and Betaoffset HARQ-ACK is the MCS offset corresponding to the HARQ-ACK information. The MCS offset table corresponding to the CSI, i.e., Table 3, includes the configuration that the Betaoffset is valued to be 0.

Optionally, in embodiment 7, when the offset value indicated in the second indication field satisfies a fourth specific condition, it may be indicated that the first UCI is transmitted in the uplink transmission resource in the limited transmission manner (recorded as a fourth manner); or, when the offset value indicated in the second indication field satisfies a fifth specific condition, it may be indicated that the first UCI is transmitted in the uplink transmission resource in the unlimited transmission manner (recorded as a fifth manner).

Descriptions will be made below with the following condition as an example: that the offset value indicated in the second indication field satisfying the fourth specific condition is that the Betaoffset of the second indication field is 0, and that the offset value indicated in the second indication field satisfying the fifth specific condition is that the Betaoffset of the second indication field is greater than 0. Of course, the embodiment of the disclosure is also applied to other specific conditions. The embodiment of the disclosure is not limited thereto.

The fourth manner: when the Betaoffset_CSI corresponding to the I_CSI is valued to be 0, it may be indicated that only the HARQ-ACK information is transmitted and the maximum bit number for transmission of the HARQ-ACK information may be N, for example, N may be 2. The MCS level for transmission of the HARQ-ACK information may refer to the Betaoffset_HARQ-ACK corresponding to the HARQ-ACK information, for example, the Betaoffset_HARQ-ACK in Table 4.

The fifth manner: if the Betaoffset CSI corresponding to the I_CSI is valued to be greater than 0, the number of bits for transmission of the HARQ-ACK information is unlimited, namely the HARQ-ACK information may be transmitted according to the practical number of bits of the HARQ-ACK information to be sent, namely all the bits of the HARQ-ACK information are transmitted. The MCS level for transmission of the HARQ-ACK information may be determined according to the Betaoffset_HARQ-ACK shown in Table 4, and the MCS level for transmission of the CSI may be determined according to the Betaoffset CSI shown in Table 5.

In such a manner, in embodiment 7, the first information may be alternately and implicitly indicated, so that the indication flexibility of the first information is improved. In such an indication manner, transmissions of both the HARQ-ACK and the CSI may be simultaneously limited, which is favorable for ensuring the transmission reliability of the uplink data.

In addition, since the importance/emergency degree of the CSI is lower than that of the HARQ-ACK information, transmission of the CSI is preferentially considered to be limited in the embodiments of the disclosure. Therefore, under the circumstance that the transmission resource is limited, the CSI is preferentially dropped to ensure transmission of the HARQ-ACK information, and the downlink transmission efficiency may be maximized.

Moreover, the bit number/transmission resource for transmission of the HARQ-ACK is explicitly limited or implicitly limited through the indication field of the CSI, and multiple transmission manners may be implemented, for example, both the CSI and the HARQ-ACK are transmitted as required (namely unlimited transmission); the CSI is not transmitted, and the HARQ-ACK is transmitted in the limited manner; and neither the CSI nor the HARQ-ACK is transmitted, so that the compromise between the uplink transmission reliability and the downlink transmission efficiency may be reached.

From another aspect, in embodiment 7, more configurations are adopted for HARQ-ACK resource indication, so that the HARQ-ACK indication flexibility is improved.

**Table 4**

| I_HARQ-ACK | Betaoffset_HARQ-ACK | I_HARQ-ACK | Betaoffset_HARQ-ACK |
|---|---|---|---|
| 0 | 2.000 | 8 | 12.625 |
| 1 | 2.500 | 9 | 15.875 |
| 2 | 3.125 | 10 | 20.000 |
| 3 | 4.000 | 11 | 31.000 |
| 4 | 5.000 | 12 | 50.000 |
| 5 | 6.250 | 13 | 80.000 |
| 6 | 8.000 | 14 | 126.000 |
| 7 | 10.000 | 15 | 1.0 |

Embodiment 8: the first indication field, in the first indication field and the second indication field, includes multiple MCS offset tables.

In embodiment 8, the first indication field may include multiple MCS offset tables, and each MCS offset table may correspond to a different condition or different scenario. For example, for uplink data transmission with a high reliability requirement, a relatively small offset range and a relatively small granularity are required, and in such case, the MCS offset table, among the multiple MCS offset tables, with a relatively small offset range and a relatively small granularity may be adopted; or, for uplink data transmission with a low reliability requirement, the MCS offset table, among the multiple MCS offset tables, with a relatively large offset range and a relatively large granularity may be adopted.

Descriptions will be made below with the condition that the first indication field includes two MCS offset tables as an example. Of course, the first indication field may also include more MCS offset tables, and a similar indication manner is adopted when the first indication field includes more MCS offset tables and will not be elaborated herein.

By way of example but not limitation, Table 1 and Table 4 may be two MCS offset tables corresponding to the HARQ-ACK information and are referred to Table a and Table b respectively.

Optionally, in embodiment 8, when the offset value indicated in the second indication field satisfies a sixth specific condition, it may be indicated that the first UCI is transmitted in the uplink transmission resource in the limited transmission manner (recorded as a sixth manner); or, when the offset value indicated in the second indication field satisfies a seventh specific condition, it may be indicated that the first UCI is transmitted in the uplink transmission resource in the unlimited transmission manner (recorded as a seventh manner).

Descriptions will be made below with the following condition as an example: that the offset value indicated in the second indication field satisfying the sixth specific condition is that the Betaoffset of the second indication field is 0, and that the offset value indicated in the second indication field satisfying the seventh specific condition is that the Betaoffset of the second indication field is greater than 0. Of course, the embodiment of the disclosure is also applied to other specific conditions. The embodiment of the disclosure is not limited thereto.

Optionally, in the embodiment of the disclosure, the two MCS offset tables included in the first indication field may have the following characteristic, for example, a maximum value of the Betaoffset in Table a is less than a maximum value of the Betaoffset in Table b; or, Table a includes the configuration that the Betaoffset is valued to be 0.

The sixth manner: when the Betaoffset_CSI corresponding to the I_CSI is valued to be 0, it may be indicated that only the HARQ-ACK information is transmitted and the maximum number of bits for transmission of the HARQ-ACK information may be N, for example, N may be 2. In this scenario, the MCS level for transmission of the HARQ-ACK information may refer to Table a.

The seventh manner: if the Betaoffset CSI corresponding to the I_CSI is valued to be greater than 0, the number of bits for transmission of the HARQ-ACK information is unlimited, namely the HARQ-ACK information may be transmitted according to the practical number of bits of the HARQ-ACK information to be sent. In this scenario, the MCS level for transmission of the HARQ-ACK information may refer to Table b, and the MCS level for transmission of the CSI may refer to the MCS offset table corresponding to the CSI.

In such a manner, in embodiment 8, the first information may be alternately and implicitly indicated, so that the indication flexibility of the first information is improved. In such an indication manner, transmissions of both the HARQ-ACK and the CSI may be simultaneously limited, which is favorable for ensuring the transmission reliability of the uplink data.

In addition, since the importance/emergency degree of the CSI is lower than that of the HARQ-ACK information, transmission of the CSI is preferentially considered to be limited in the embodiments of the disclosure. Therefore, under the circumstance that the transmission resource is limited, the CSI is preferentially dropped to ensure transmission of the HARQ-ACK information, and the downlink transmission efficiency may be maximized.

Moreover, the bit number/transmission resource for transmission of the HARQ-ACK is explicitly limited or implicitly limited through the indication field of the CSI, and multiple transmission manners may be implemented, for example, both the CSI and the HARQ-ACK are transmitted as required (namely unlimited transmission); the CSI is not transmitted, and the HARQ-ACK is transmitted in the limited manner; and neither the CSI nor the HARQ-ACK is transmitted, so that the compromise between the uplink transmission reliability and the downlink transmission efficiency may be reached.

Furthermore, in embodiment 8, a piece of UCI may correspond to multiple MCS offset tables, so that an MCS offset indication range is more flexible, and the MCS offset tables suitable for corresponding scenarios may be configured for multiple scenarios, which is favorable for satisfying a data transmission requirement.

Embodiment 9: the first information is carried in multiple indication fields for indicating the MCS offset, each of the multiple indication fields corresponds to a respective bit number range, and the bit number range is used for indicating a range for limiting a number of bits for limited transmission of the downlink control information.

For example, the first information may be carried in three indication fields, and each of the three indication fields may correspond to a respective bit number range. For example, the three indication fields may include an indication field 1, an indication field 2 and an indication field 3, a bit number range corresponding to the indication field 1 may be 0 to 2, namely maximally 2 bits of UCI may be transmitted, a bit number range corresponding to the indication field 2 may be greater than 2 and less than 11, and a bit number range corresponding to the indication field 3 may be greater than 11. Offset values of the three indication fields may be configured to indicate the bit number range for transmission of the UCI.

By way of example but not limitation, each of the indication field 1, the indication field 2 and the indication field 3 includes the configuration that the Betaoffset is 0, an MCS Betaoffset table corresponding to the indication field 1 may be shown in Table 5, an MCS Betaoffset table corresponding to the indication field 2 may be shown in Table 6, and an MCS Betaoffset table corresponding to the indication field 3 may be shown in Table 7.

By way of example but not limitation, when the Betaoffsets in the indication field 3 and the indication field 2 are configured to be 0 and the Betaoffset in the indication field 1 is configured to be greater than 0, it is indicated that a maximally 2-bit HARQ-ACK is transmitted; when the Betaoffsets in the indication field 1 and the indication field 2 are configured to be 0 and the Betaoffset in the indication field 3 is configured to be greater than 0, it is indicated that a maximally 11 bits of HARQ-ACK may be transmitted; and when the Betaoffsets in the indication field 1 and the indication field 3 are configured to be 0 and the Betaoffset in the indication field 2 is configured to be greater than 0, it is indicated that 3 to 11 bits of HARQ-ACK may be transmitted.

**Table 5**

| I_HARQ-ACK | Betaoffset_HARQ-ACK | I HARQ-ACK | Betaoffset_HARQ-ACK |
|---|---|---|---|
| 0 | 0 | 8 | 10.000 |
| 1 | 2.000 | 9 | 12.625 |
| 2 | 2.500 | 10 | 15.875 |
| 3 | 3.125 | 11 | 20.000 |
| 4 | 4.000 | 12 | 31.000 |
| 5 | 5.000 | 13 | 50.000 |
| 6 | 6.250 | 14 | 80.000 |
| 7 | 8.000 | 15 | 1.0 |

**Table 6**

| I_HARQ-ACK | Betaoffset_HARQ-ACK | I_HARQ-ACK | Betaoffset_HARQ-ACK |
|---|---|---|---|
| 0 | 0 | 8 | 10.000 |
| 1 | 2.000 | 9 | 12.625 |
| 2 | 2.500 | 10 | 15.875 |
| 3 | 3.125 | 11 | 20.000 |
| 4 | 4.000 | 12 | 25.00 |
| 5 | 5.000 | 13 | 30.00 |
| 6 | 6.250 | 14 | 35.00 |
| 7 | 8.000 | 15 | 1.0 |

**Table 7**

| I_HARQ-ACK | Betaoffset_HARQ-ACK | I_HARQ-ACK | Betaoffset_HARQ-ACK |
|---|---|---|---|
| 0 | 0 | 8 | 10.000 |
| 1 | 2.000 | 9 | 12.625 |
| 2 | 2.500 | 10 | 15.875 |
| 3 | 3.125 | 11 | 17.00 |
| 4 | 4.000 | 12 | 19.00 |
| 5 | 5.000 | 13 | 21.00 |
| 6 | 6.250 | 14 | 23.00 |
| 7 | 8.000 | 15 | 25.00 |

It should be understood that the above manner of indicating the range of the bit number for transmission of the downlink control information through the multiple indication fields is only an example and should not form any limit to the embodiment of the disclosure and the bit number range for transmission of the UCI may also be determined in another indication manner in the embodiment of the disclosure. The embodiment of the disclosure is not limited thereto.

In such a manner, in embodiment 9, the number of bits for transmission of the UCI may be flexibly indicated through the multiple indication fields, so that the flexibility of UCI resource indication is improved.

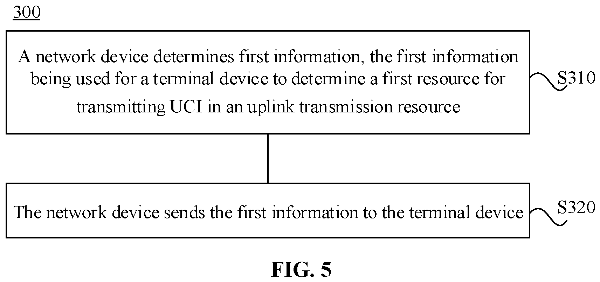

The method for information transmission in the embodiment of the disclosure is described above in combination with FIG. 2 to FIG. 4 in detail from the perspective of the terminal device. A method for information transmission of another embodiment of the disclosure will be described below in combination with FIG. 5 in detail from the perspective of the network device. It should be understood that descriptions made on a network device side correspond to descriptions made on a terminal device side and similar descriptions may refer to the above and, for avoiding repetitions, will not be elaborated herein.

FIG. 5 is a schematic flowchart of a method for information transmission 300 according to another embodiment of the disclosure. The method 300 may be executed by the network device in the communication system illustrated in FIG. 1. As illustrated in FIG. 5, the method 300 includes the following contents.

In S310, the network device determines first information, the first information being used for determining a first resource for transmitting UCI in an uplink transmission resource.

In S320, the network device sends the first information to the terminal device.

Optionally, in some embodiments, the first information may indicate at least one of:
whether the UCI can be transmitted in the uplink transmission resource or not, a number of resources available for transmission of the UCI, a resource proportion available for transmission of the UCI, a number of bits of the UCI that can be transmitted, or, a type of the UCI that can be transmitted.

Optionally, in some embodiments, the first information is explicitly or implicitly indicated.

Optionally, in some embodiments, the first information is carried in an indication field for indicating an MCS offset of the UCI.

Optionally, in some embodiments, the first information is carried in multiple indication fields for indicating the MCS offset of the UCI, each of the multiple indication fields corresponds to a respective bit number range, and the bit number range indicates a range of a number of bits for limited transmission of the downlink control information.

Optionally, in some embodiments, when an offset value indicated in the indication field satisfies a first condition, it is indicated that the UCI cannot be transmitted through the uplink transmission resource.

Optionally, in some embodiments, that the offset value indicated in the indication field satisfying the first condition includes that the offset value indicated in the indication field is zero.

Optionally, in some embodiments, a value of a first part of the indication field is used for indicating UCI limited for transmission, and a value of a second part of the indication field is used for indicating UCI unlimited for transmission.

Optionally, in some embodiments, the indication field may indicate whether transmission of HARQ-ACK information is limited or not.

Optionally, in some embodiments, the indication field is an indication field corresponding to CSI, and when the offset value indicated in the indication field satisfies a specific condition, it is indicated that the number of bits of the UCI that can be transmitted is less than or equal to N and/or the UCI that can be transmitted is HARQ-ACK information, N being a positive integer.

Optionally, in some embodiments, that the offset value indicated in the indication field satisfying the specific condition may include that the offset value indicated in the indication field is zero.

Optionally, in some embodiments, the terminal device determines the first information according to a type of a data channel and/or a duration for data transmission.

Optionally, in some embodiments, the first information is dedicated to a semi-persistent resource.

Optionally, in some embodiments, the UCI includes at least one of the following:
a HARQ-ACK, an RI, a CQI, a PMI, a CRI, an SLI, or L1-RSRP.

Optionally, in some embodiments, the first information is dedicated to a semi-persistent resource.

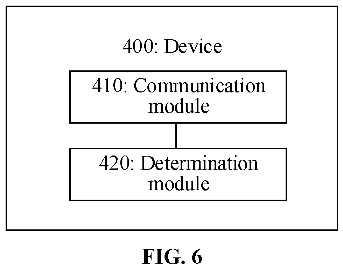

The method embodiments of the disclosure are described above in combination with FIG. 2 to FIG. 5 in detail and device embodiments of the disclosure will be described below in combination with FIG. 6 to FIG. 9 in detail. It is to be understood that the device embodiments correspond to the method embodiments and similar descriptions may refer to the method embodiments.

FIG. 6 is a schematic block diagram of a device for information transmission 400 according to an embodiment of the disclosure. As illustrated in FIG. 6, the device 400 includes a communication module 410 and a determination module 420.

The communication module 410 is configured to receive first information from a network device.

The determination module 420 is configured to determine, based on the first information, a first resource for transmitting UCI in an uplink transmission resource.

The communication module 410 is further configured to transmit the UCI according to the first resource.

Optionally, in some embodiments, the first information is configured to indicate at least one of:
whether the UCI can be transmitted in the uplink transmission resource or not; a number of resources available for transmission of the UCI; a resource proportion available for transmission of the UCI; a number of bits of the UCI that can be transmitted; or, a type of the UCI that can be transmitted.

Optionally, in some embodiments, the first information is explicitly or implicitly indicated.

Optionally, in some embodiments, the first information is carried in an indication field for indicating an MCS offset of the UCI.

Optionally, in some embodiments, the first information is carried in multiple indication fields for indicating the MCS offset of the UCI, each of the multiple indication fields corresponds to a respective bit number range, and the bit number range is used for indicating a range of a number of bits for limited transmission of the downlink control information.

Optionally, in some embodiments, when an offset value indicated in the indication field satisfies a first condition, it is indicated that the UCI cannot be transmitted through the uplink transmission resource.

Optionally, in some embodiments, that the offset value indicated by the indication field satisfying the first condition includes that the offset value indicated in the indication field is zero.

Optionally, in some embodiments, a value of a first part of the indication field may indicate UCI limited for transmission, and a value of a second part of the indication field may indicate UCI unlimited for transmission.

Optionally, in some embodiments, the indication field may indicate whether HARQ-ACK information transmission is limited or not.

Optionally, in some embodiments, the indication field is an indication field corresponding to CSI, and when the offset indicated by the indication field satisfies a specific condition, it is indicated that the number of bits of the UCI that can be transmitted is less than or equal to N and/or the type of the UCI that can be transmitted is HARQ-ACK information, N being a positive integer.

Optionally, in some embodiments, the offset indicated in the indication field satisfying the specific condition may include that an offset value of zero indicated in the indication field.

Optionally, in some embodiments, the terminal device determines the first information according to a type of a data channel and/or a duration for data transmission.

Optionally, in some embodiments, the first information is specific to a semi-persistent resource.

Optionally, in some embodiments, the UCI includes at least one of the following:
a HARQ-ACK, an RI, a CQI, a PMI, a CRI, an SLI, or L1-RSRP.

Optionally, in some embodiments, the first information is specific to a semi-persistent resource.

It is to be understood that the information transmission device 400 according to the embodiment of the disclosure may correspond to the terminal device in the method embodiment of the disclosure and the abovementioned and other operations and/or functions of each unit in the device 400 are adopted to implement the corresponding flows executed by the terminal device in the method 200 illustrated in FIG. 2 respectively and will not be elaborated herein for simplicity.

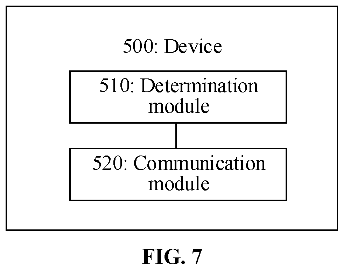

FIG. 7 is a schematic block diagram of a device for information transmission according to an embodiment of the disclosure. The device 500 illustrated in FIG. 7 includes a determination module 510 and a communication module 520.

The determination module 510 is configured to determine first information, the first information being used for determining a first resource for transmitting UCI in an uplink transmission resource.

The communication module 520 is configured to send the first information to a terminal device.

Optionally, in some embodiments, the first information ,may indicate at least one of:
whether the UCI can be transmitted in the uplink transmission resource or not; a number of resources available for transmission of the UCI, a resource proportion available for transmission of the UCI, a number of bits of the UCI that can be transmitted; or, a type of the UCI that can be transmitted.

Optionally, in some embodiments, the first information is explicitly or implicitly indicated.

Optionally, in some embodiments, the first information is carried in an indication field for indicating an MCS offset of the UCI.

Optionally, in some embodiments, the first information is carried in multiple indication fields for indicating the MCS offset of the UCI, each of the multiple indication fields corresponds to a respective bit number range, and the bit number range is used to indicate a range of a number of bits for limited transmission of the downlink control information.

Optionally, in some embodiments, when an offset value indicated by the indication field satisfies a first condition, it is indicated that the UCI cannot be transmitted through the uplink transmission resource.

Optionally, in some embodiments, that the offset value indicated by the indication field satisfying the first condition includes that the offset value indicated by the indication field is zero.

Optionally, in some embodiments, a value of a first part of the indication field may indicate UCI limited for transmission, and a value of a second part of the indication field may indicate UCI unlimited for transmission.

Optionally, in some embodiments, the indication field may indicate whether HARQ-ACK information transmission is limited or not.

Optionally, in some embodiments, the indication field is an indication field corresponding to CSI, and when the offset indicated by the indication field satisfies a specific condition, it is indicated that the number of bits of the UCI that can be transmitted is less than or equal to N and/or the type of the UCI that can be transmitted is HARQ-ACK information, N being a positive integer.

Optionally, in some embodiments, that the offset indicated by the indication field satisfies the specific condition may include that the offset value indicated by the indication field is zero.

Optionally, in some embodiments, the terminal device determines the first information according to a type of a data channel and/or a duration for data transmission.

Optionally, in some embodiments, the first information is specific to a semi-persistent resource.

Optionally, in some embodiments, the UCI includes at least one of the following information:
a HARQ-ACK, an RI, a CQI, a PMI, a CRI, an SLI, or L1-RSRP.

Optionally, in some embodiments, the first information is specific to a semi-persistent resource.

Specifically, the device 500 may correspond to (for example, configured in or is) the network device described in the method 300, and moreover, each module or unit in the device 500 is configured to execute each operation or processing process executed by the network device in the method 300. For avoiding elaborations, detailed descriptions will be omitted herein.

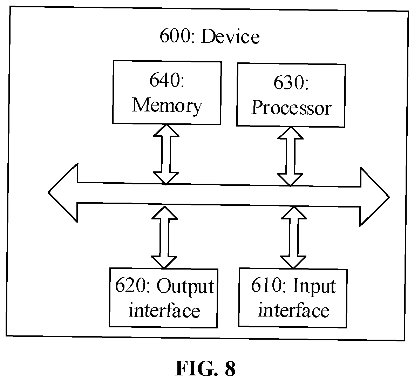

As illustrated in FIG. 8, an embodiment of the disclosure also provides a device for information transmission 600. The device 600 may be the device 400 in FIG. 6, and may be configured to execute contents of the terminal device corresponding to the method 200 in FIG. 2. The device 600 includes an input interface 610, an output interface 620, a processor 630 and a memory 640. The input interface 610, the output interface 620, the processor 630 and the memory 640 may be connected through a bus system. The memory 640 is configured to store a program, one or more instructions or a code. The processor 630 is configured to execute the program instructions or code in the memory 640 to control the input interface 610 to receive a signal, control the output interface 620 to send a signal and complete operations in the method embodiments.

It is to be understood that, in the embodiment of the disclosure, the processor 630 may be a central processing unit (CPU) and the processor 630 may also be another universal processor, a digital signal processor (DSP), an application specific integrated circuit (ASIC), a field programmable gate array (FPGA) or another programmable logic device, discrete gate or transistor logic device and discrete hardware component and the like. The universal processor may be a microprocessor or the processor may also be any conventional processor and the like.

The memory 640 may include a read-only memory (ROM) and a random access memory (RAM) and provides instructions and data for the processor 630. A part of the memory 640 may further include a non-transitory RAM. For example, the memory 640 may further store information of a device type.

In an implementation process, each content of the method may be completed by an integrated logic circuit of hardware in the processor 630 or instructions in a software form. The contents of the method disclosed in combination with the embodiments of the disclosure may be directly embodied to be executed and completed by a hardware processor or executed and completed by a combination of hardware and software modules in the processor. The software module may be located in a mature storage medium in this field such as a RAM, a flash memory, a ROM, a programmable ROM or electrically erasable programmable ROM and a register. The storage medium is located in the memory 640. The processor 630 reads information in the memory 640 and completes the contents of the method in combination with hardware. Detailed descriptions are omitted herein to avoid repetitions.

In a specific implementation mode, the communication module 410 of the device 400 in FIG. 6 may be implemented by the output interface 620 and input interface 610 in FIG. 8, and the determination module 420 of the device 400 in FIG. 6 may be implemented by the processor 630 in FIG. 8.

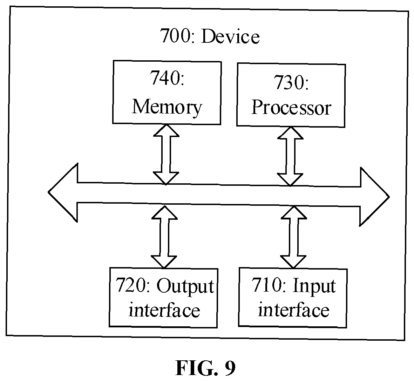

As illustrated in FIG. 9, an embodiment of the disclosure also provides a device for information transmission 700. The device 700 may be the device 500 in FIG. 7, and may be configured to execute contents of the network device corresponding to the method 300 in FIG. 5. The device 700 includes an input interface 710, an output interface 720, a processor 730 and a memory 740. The input interface 710, the output interface 720, the processor 730 and the memory 740 may be connected through a bus system. The memory 740 is configured to store a program, one or more instructions or a code. The processor 730 is configured to execute the program instructions or code in the memory 740 to control the input interface 710 to receive a signal, control the output interface 720 to send a signal and complete operations in the method embodiments.

It is to be understood that, in the embodiment of the disclosure, the processor 730 may be a CPU and the processor 730 may also be another universal processor, a DSP, an ASIC, an FPGA or another programmable logic device, discrete gate or transistor logic device and discrete hardware component and the like. The universal processor may be a microprocessor or the processor may also be any conventional processor and the like.

The memory 740 may include a ROM and a RAM and provides instructions and data for the processor 730. A part of the memory 740 may further include a nonvolatile RAM. For example, the memory 740 may further store information of a device type.

In an implementation process, each content of the method may be completed by an integrated logic circuit of hardware in the processor 730 or an instruction in a software form. The contents of the method disclosed in combination with the embodiments of the disclosure may be directly embodied to be executed and completed by a hardware processor or executed and completed by a combination of hardware and software modules in the processor. The software module may be located in a mature storage medium in this field such as a RAM, a flash memory, a ROM, a programmable ROM or electrically erasable programmable ROM and a register. The storage medium is located in the memory 740. The processor 730 reads information in the memory 740 and completes the contents of the method in combination with hardware. Detailed descriptions are omitted herein to avoid repetitions.

In a specific implementation mode, the determination module 510 of the device 500 in FIG. 7 may be implemented by the processor 730 in FIG. 9, and the communication module 520 of the device 500 in FIG. 7 may be implemented by the input interface 710 and output interface 720 in FIG. 9.

An embodiment of the disclosure also discloses a computer-readable storage medium, which stores one or more programs, the one or more programs including instructions and the instructions being executed by a portable electronic device including multiple applications to enable the portable electronic device to execute the methods of the embodiments illustrated in FIG. 2 and FIG. 3.

An embodiment of the disclosure also discloses a computer program, which includes instructions, the computer program being executed by a computer to enable the computer to execute corresponding flows in the methods of the embodiments illustrated in FIG. 2 and FIG. 3.

Those of ordinary skill in the art may realize that the units and algorithm operations of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure.

Those skilled in the art may clearly learn about that specific working processes of the system, device and unit described above may refer to the corresponding processes in the method embodiment and will not be elaborated herein for convenient and brief description.

In some embodiments provided by the disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the steps of the method in each embodiment of the disclosure. The storage medium includes: various media capable of storing program codes such as a U disk, a mobile hard disk, a ROM, a RAM, a magnetic disk or an optical disk.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A method for information transmission, comprising:
receiving, by a terminal device, first information from a network device;
determining, by the terminal device, based on the first information, a first resource for transmitting uplink control information (UCI) in an uplink transmission resource; and
transmitting, by the terminal device, the UCI according to the first resource.

2. The method of claim 1, wherein the first information indicates at least one of:
whether the UCI can be transmitted in the uplink transmission resource;
a number of resources available for transmission of the UCI;
a resource proportion available for transmission of the UCI;
a number of bits of the UCI that can be transmitted; or
a type of the UCI that can be transmitted.

3. The method of claim 1 or 2, wherein the first information is explicitly or implicitly indicated.

4. The method of claim 3, wherein the first information is carried in an indication field for indicating a modulation and coding scheme (MCS) offset of the UCI.

5. The method of claim 4, wherein the first information is carried in a plurality of indication fields for indicating the MCS offset of the UCI, each of the plurality of indication fields corresponds to a respective bit number range and/or UCI type, and the bit number range indicates a range of a number of bits for limited transmission of downlink control information.

6. The method of claim 4 or 5, wherein an offset value indicated in the indication field satisfying a first condition indicates that the UCI cannot be transmitted through the uplink transmission resource.

7. The method of claim 6, wherein the offset value indicated in the indication field satisfying the first condition comprises an offset value of zero indicated in the indication field.

8. The method of claim 4, wherein a value of a first part of the indication field indicates UCI limited for transmission, and a value of a second part of the indication field indicates UCI unlimited for transmission.

9. The method of claim 4, wherein the indication field indicates whether transmission of hybrid automatic repeat request ACKnowledgement (HARQ-ACK) information is limited.

10. The method of claim 9, wherein the indication field is an indication field corresponding to channel state information (CSI), and when the offset value indicated in the indication field satisfies a specific condition, at least one of the following is indicated:
a number of bits of the UCI that can be transmitted is less than or equal to N; or
a type of the UCI that can be transmitted is HARQ-ACK information, N being a positive integer.

11. The method of claim 10, wherein the offset value indicated in the indication field satisfying the specific condition comprises an offset value of zero indicated in the indication field.

12. The method of any one of claims 1-11, wherein the terminal device determines the first information according to at least one of a type of a data channel or a duration for data transmission.

13. The method of any one of claims 1-12, wherein the first information is specific to a semi-persistent resource.

14. The method of any one of claims 1-13, wherein the UCI comprises at least one of:
a HARQ-ACK, a rank indicator (RI), a channel quality indication (CQI), a precoding matrix indication (PMI), a CSI reference signal resource indicator (CRI), a strongest layer indication (SLI), or layer 1-reference signal received power (L1-RSRP).

15. A method for information transmission, comprising:
determining, by a network device, first information, wherein the first information is used for a terminal device to determine a first resource for transmitting uplink control information (UCI) in an uplink transmission resource; and
sending, by the network device, the first information to the terminal device.

16. The method of claim 15, wherein the first information indicates at least one of:
whether the UCI can be transmitted in the uplink transmission resource;
a number of resources available for transmission of the UCI;
a resource proportion available for transmission of the UCI;
a number of bits of the UCI that can be transmitted; or
a type of the UCI that can be transmitted.

17. The method of claim 15 or 16, wherein the first information is explicitly or implicitly indicated.

18. The method of claim 17, wherein the first information is carried in an indication field for indicating a modulation and coding scheme (MCS) offset of the UCI.

19. The method of claim 18, wherein the first information is carried in a plurality of indication fields for indicating the MCS offset of the UCI, each of the plurality of indication fields corresponds to a respective bit number range, and the bit number range indicates a range of a number of bits for limited transmission of downlink control information.

20. The method of claim 18 or 19, wherein an offset value indicated in the indication field satisfying a first condition indicates that the UCI cannot be transmitted through the uplink transmission resource.

21. The method of claim 20, wherein the offset value indicated in the indication field satisfying the first condition comprises an offset value of zero indicated in the indication field.

22. The method of claim 18, wherein a value of a first part of the indication field indicates UCI limited for transmission, and a value of a second part of the indication field indicates UCI unlimited for transmission.

23. The method of claim 18, wherein the indication field indicates whether transmission of hybrid automatic repeat request ACKnowledgement (HARQ-ACK) information is limited.

24. The method of claim 23, wherein the indication field is an indication field corresponding to channel state information (CSI), and when the offset value indicated in the indication field satisfies a specific condition, at least one of the following is indicated:
a number of bits of the UCI that can be transmitted is less than or equal to N; or
a type of the UCI that can be transmitted is HARQ-ACK information, N being a positive integer.

25. The method of claim 24, wherein the offset value indicated in the indication field satisfying the specific condition comprises an offset value of zero indicated in the indication field.

26. The method of any one of claims 15-25, wherein the terminal device determines the first information according to at least one of a type of a data channel or a duration for data transmission.

27. The method of any one of claims 15-26, wherein the first information is specific to a semi-persistent resource.

28. The method of any one of claims 15-27, wherein the UCI comprises at least one of:
a HARQ-ACK, a rank indicator (RI), a channel quality indication (CQI), a precoding matrix indication (PMI), a CSI reference signal resource indicator (CRI), a strongest layer indication (SLI), or layer 1-reference signal received power (L1-RSRP).

29. A device for information transmission, comprising:
a communication module, configured to receive first information from a network device; and
a determination module, configured to determine, based on the first information, a first resource for transmitting uplink control information (UCI) in an uplink transmission resource,
wherein the communication module is further configured to transmit the UCI according to the first resource.

30. The device of claim 29, wherein the first information indicates at least one of:
whether the UCI can be transmitted in the uplink transmission resource;
a number of resources available for transmission of the UCI;
a resource proportion available for transmission of the UCI;
a number of bits of the UCI that can be transmitted; or
a type of the UCI that can be transmitted.

31. The device of claim 29 or 30, wherein the first information is explicitly or implicitly indicated.

32. The device of claim 31, wherein the first information is carried in an indication field for indicating a modulation and coding scheme (MCS) offset of the UCI.

33. The device of claim 32, wherein the first information is carried in a plurality of indication fields for indicating the MCS offset, each of the plurality of indication fields corresponds to a respective bit number range, and the bit number range indicates a range of a number of bits for limited transmission of downlink control information.

34. The device of claim 32 or 33, wherein an offset value indicated in the indication field satisfying a first condition indicates that the UCI cannot be transmitted through the uplink transmission resource.

35. The device of claim 34, wherein the offset value indicated in the indication field satisfying the first condition comprises an offset value of zero indicated in the indication field.

36. The device of claim 32, wherein a value of a first part of the indication field indicates UCI limited for transmission, and a value of a second part of the indication field indicates UCI unlimited for transmission.

37. The device of claim 32, wherein the indication field indicates whether transmission of hybrid automatic repeat request ACKnowledgement (HARQ-ACK) information is limited.

38. The device of claim 37, wherein the indication field is an indication field corresponding to channel state information (CSI), and when the offset indicated in the indication field satisfies a specific condition, at least one of the following is indicated:
a number of bits of the UCI that can be transmitted is less than or equal to N; or
a type of the UCI that can be transmitted is HARQ-ACK information, N being a positive integer.

39. The device of claim 38, wherein the offset value indicated in the indication field satisfying the specific condition comprises an offset value of zero indicated in the indication field.

40. The device of any one of claims 29-39, wherein the terminal device determines the first information according to at least one of a type of a data channel or a duration for data transmission.

41. The device of any one of claims 29-40, wherein the first information is specific to a semi-persistent resource.

42. The device of any one of claims 29-41, wherein the UCI comprises at least one of:
a HARQ-ACK, a rank indicator (RI), a channel quality indication (CQI), a precoding matrix indication (PMI), a CSI reference signal resource indicator (CRI), a strongest layer indication (SLI), or layer 1-reference signal received power (L1-RSRP).

43. A device for information transmission, comprising:
a determination module, configured to determine first information, wherein the first information is used for a terminal device to determine a first resource for transmitting uplink control information (UCI) in an uplink transmission resource; and
a communication module, configured to send the first information to the terminal device.

44. The device of claim 43, wherein the first information indicates at least one of:
whether the UCI can be transmitted in the uplink transmission resource;
a number of resources available for transmission of the UCI;
a resource proportion available for transmission of the UCI;
a number of bits of the UCI that can be transmitted; or
a type of the UCI that can be transmitted.

45. The device of claim 43 or 44, wherein the first information is explicitly or implicitly indicated.

46. The device of claim 45, wherein the first information is carried in an indication field for indicating a modulation and coding scheme (MCS) offset of the UCI.

47. The device of claim 46, wherein the first information is carried in a plurality of indication fields for indicating the MCS offset of the UCI, each of the plurality of indication fields corresponds to a respective bit number range, and the bit number range indicates a range of a number of bits for limited transmission of downlink control information.

48. The device of claim 46 or 47, wherein an offset value indicated in the indication field satisfying a first condition indicates that the UCI cannot be transmitted through the uplink transmission resource.

49. The device of claim 48, wherein the offset value indicated in the indication field satisfying the first condition comprises an offset value of zero indicated in the indication field.

50. The device of claim 46, wherein a value of a first part of the indication field indicates UCI limited for transmission, and a value of a second part of the indication field indicates UCI unlimited for transmission.

51. The device of claim 46, wherein the indication field indicates whether transmission of hybrid automatic repeat request ACKnowledgement (HARQ-ACK) information is limited.

52. The device of claim 51, wherein the indication field is an indication field corresponding to channel state information (CSI), and when the offset value indicated in the indication field satisfies a specific condition, at least one of the following is indicated:
a number of bits of the UCI that can be transmitted is less than or equal to N; or
a type of the UCI that can be transmitted is HARQ-ACK information, N being a positive integer.

53. The device of claim 52, wherein the offset value indicated in the indication field satisfying the specific condition comprises an offset value of zero indicated in the indication field.

54. The device of any one of claims 43-53, wherein the terminal device determines the first information according to at least one of a type of a data channel or a duration for data transmission.

55. The device of any one of claims 43-54, wherein the first information is specific to a semi-persistent resource.

56. The device of any one of claims 43-55, wherein the UCI comprises at least one of:
a HARQ-ACK, a rank indicator (RI), a channel quality indication (CQI), a precoding matrix indication (PMI), a CSI reference signal resource indicator (CRI), a strongest layer indication (SLI), or layer 1-reference signal received power (L1-RSRP).
